**Europäisches Patentamt**

**European Patent Office**

**Office européen des brevets**

(19)

(11) Publication number: **0 111 506**
**B1**

## EUROPEAN PATENT SPECIFICATION

(12)

(45) Date of publication of patent specification: **27.07.88**

(51) Int. Cl.⁴: **B 65 G 27/08** // B06B1/16

(21) Application number: **83901713.4**

(22) Date of filing: **09.06.83**

(86) International application number:
**PCT/FI83/00043**

(87) International publication number:
**WO 83/04403 22.12.83 Gazette 83/29**

(54) **VIBRATING CONVEYOR.**

(30) Priority: **10.06.82 FI 822078**
**10.06.82 FI 822079**

(43) Date of publication of application:
**27.06.84 Bulletin 84/26**

(45) Publication of the grant of the patent:
**27.07.88 Bulletin 88/30**

(84) Designated Contracting States:
**AT DE FR GB SE**

(56) References cited:
**EP-A-0 025 408**
**GB-A-1 242 892**
**US-A-2 854 130**
**US-A-3 053 379**

(73) Proprietor: **TAHKA OY**
**SF-64260 Kaskinen (FI)**

(72) Inventor: **LEHTOLA, Erkki Topias**
**SF-64240 Böle (FI)**

(74) Representative: **Bridge-Butler, Alan James et al**
**G.F. REDFERN & CO. High Holborn House 52/54**
**High Holborn**
**London WC1V 6RL (GB)**

Courier Press, Leamington Spa, England.

## Description

The present invention relates to a vibrating conveyor, which comprises a frame, a suporting surface, connected to the frame, for the material to be handled, and a drive mechanism by means of which the reciprocal vibratory motion of the supporting surface is produced.

Several different types of vibrating conveyors are known which have a supporting surface, most commonly a trough, for the material to be conveyed, and in which the necessary vibratory motion is produced by a cam, compressed air, a camshaft, a magnet, or rotating unbalanced masses.

In principle, vibrating conveyors can be divided into conveyors in which the conveying motion and also the conveying of the material itself is horizontal and conveyors in which there is a vertical force component in addition to the horizontal force component. In the former conveyors the reciprocal motion of the trough is different when the trough moves forwards and when it moves backwards. The conveying effect is produced by having the trough move forwards slowly, whereas the return movement is rapid. The same effect is, of course, produced, if the trough moves forwards rapidly and thereafter the movement is suddenly stopped, at which time the material being conveyed continues its movement further under the effect of discontinuity. In this case the returning movement of the trough must be slow. Conveyors of this type, in which only a horizontal force component is effective, have a disadvantage in the packing of the material being conveyed and in the high wearing effect of friction between the material being conveyed and the conveyor. In the above-mentioned conveyors in which both a horizontal force component and a vertical force component are effective, the movement of the trough is orientated diagonally upwards. If the vertical force component is sufficient, there occurs an ejecting movement, whereby the material being conveyed detaches from the bottom of the trough and thus moves forwards.

At the present time vibrating conveyors are commonly used in which the vibratory motion of the trough is produced by the joint effect of a movement transmitted by a camshaft and spring components, or by the joint effect of an unbalanced rotating mass and spring components. The springs used are, for example, flat springs, helical springs, leaf springs, or in some cases rubber springs. In such systems, however, the structure and the method of attachment of the spring components is often complicated. In addition, the possibility of regulating the trough movement by means of springs is very limited. Known vibrating conveyors require firm securing to the base owing to dynamic horizontal and vertical forces. Known vibrating conveyors have a further disadvantage in that they produce a great deal of noise when running empty.

British Patent Specification 1 242 892 shows a conveyor which hangs beneath a fixed frame but in this construction the conveyor is freely located on the frame by pendulums on which the conveyor rests. It is not firmly attached or secured to the pendulums so that it is only suitable for small constructions. There are disadvantages with this construction in as much that a major part of the conveyor construction is above the trough which considerably increases the head height.

United States Patent Specification 3 053 379 shows a trough which is carried above support means by spring links which only provide a relatively insecure support and in United States Specification 2 854 130 the trough is supported by arms which are connected to the trough and the support by rubber bushes. With this latter arrangement however the arms do not extend through openings in the frame of the supporting surface assembly and resilient components are merely provided directly between the arm and the other member. Thus, the resilience of the joint relies entirely on the resilient component but this is only provided on one side of the part which it is supporting.

The present invention is intended to provide a more effective means of resilient attachment between the vibrating conveyor frame and its trough or other similar part, the attachment being simple and the movement of the trough or other similar part being regulatable in a simple manner by means of the attachment.

The invention is also intended to provide a vibrating conveyor which is inexpensive, simple and easy to operate, as well as easy to attach to its base. A further object being to provide a vibrating conveyor which produces as little disturbing noise as possible.

According to the present invention a vibrating conveyor comprises a frame, a supporting surface assembly for the material to be conveyed, said assembly being superposed and connected to the frame, and driving means including motive means and two unbalanced rotating masses driven by said motive means at the same speed in opposite directions, said rotating masses being connected to said assembly for imparting a substantially horizontal reciprocal motion thereto, characterized in that the supporting surface assembly is supported on the frame by means of rigid bars, one end of each bar extending through an opening in part of said frame and the other end of each bar extending through an opening in part of said assembly, fastening means for attaching the bars to the frame and assembly, and resilient means through which the bar extends and on which the fastening acts and which bear against both sides of the opening in the frame and assembly to longitudinally resiliently locate the bar in position therein, and in that said motive means includes a single motor driving one of said two unbalanced masses, the other unbalanced mass being driven from the first mass.

The invention can be performed in various ways and some embodiments of a vibrating conveyor according to the invention will now be described by way of example and with reference to the accompanying drawing, in which:

Figure 1 is a side view of a vibrating conveyor according to the invention,

Figure 2a is a top view of a detail of the structure according to Figure 1, and

Figure 2b is a top view of another detail of the structure aocording to Figure 1.

In the constructions shown in the accompanying drawings reference numeral 1 indicates a conveyor frame, which comprises two parallel beams and two transverse beams connecting them. A trough 2 is supported by bars 6 and has projections 10, which have openings for the ends of the bars 6. Likewise, the transverse beams of the frame structure 1 have openings for the opposite ends of the bars. At the points of attachment of the bars 6 to the frame 1 and to the trough 2 resilient components are provided by rubber discs 6a, 6b, 6c and 6d. The ends of the bars 6 are threaded, and the bars 6 are attached to the frame 1 and the trough 2 by means of nuts 9, washers being advantageously used between the rubber discs and the nuts 9. It is also possible to use other known fastening methods. In place of rubber discs 6a, 6b, 6c and 6d it is possible to use different types of resilient plastic components or springs, such as steel spiral springs. The resilient components of rubber or the like are preferably circular, but they may also have some other shape, for example square. In addition, the rubber discs may consist of two halves, which facilitates their replacement.

If desired several rubber discs can be fitted one on top of the other.

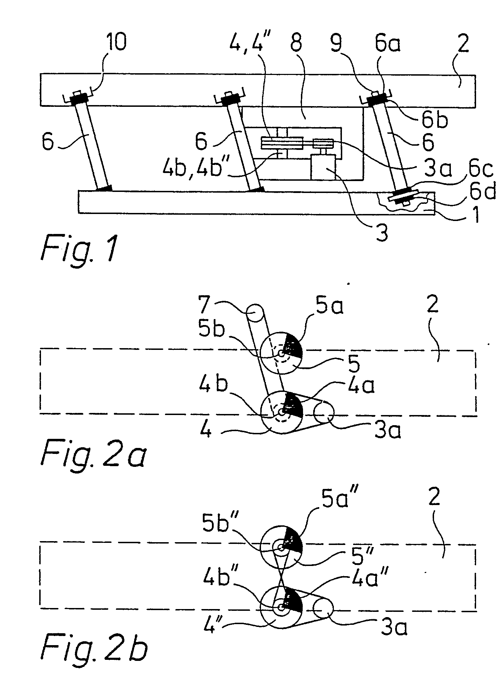

A supporting structure 8 is connected to the trough 2 and carries a motor 3. In Figure 1 a V belt transmission is used, in Figure 2a a chain transmission is used, and in Figure 2b a toothed belt is utilized, but the general arrangement of the various parts is somewhat similar and only one side elevation (Figure 1) which is appropriate to all three constructions is shown.

The motor 3 has a drive wheel 3a which, in Figure 1, is suitable to receive a V belt which drives a wheel in the form of a belt pulley 4 (or 4'') carried on a vertical shaft 4b (or 4b''). The wheel is unbalanced by means of a counterweight 4a (or 4a'') and is carried in bearings on the supporting structure 8 to provide a rotating unbalanced mass. A further unbalanced wheel 5 (or 5'') in the form of another belt pulley of similar shape to the wheel 4 and which is again unbalanced by means of a counterweight 5a (or 5a'') is carried on a vertical shaft 5b (or 5b'') is also located in bearings carried by the supporting structure 8 and is rotated by a further V belt from the wheel 4 (or 4'').

In the arrangement shown in Figure 2a the belt pulleys are replaced by sprockets which can be driven by chains, an idler wheel 7 being provided so that the wheel 5 is driven from one side of the transmission chain.

In the arrangement shown in 2b a toothed belt is used crosswise around belt pulleys 4'' and 5''

and in order that the toothed belt should not chafe at the crossing point the shafts 4b'' and 5b'' are installed somewhat obliquely in relation to each other.

Thus, in all these embodiments the motor 3 rotates the wheels 4 and 5 (or 4'' and 5'') at the same speed but in opposite directions and the motion of the wheels 4 and 5 (or 4'' and 5'') are synchronised to the same phase. Thus the counterweights 4a and 5a (or 4a'' and 5a'') in the wheels 4 and 5 (or 4'' and 5'') phase simultaneously towards the conveying direction of the vibrating conveyor and, of course, also simultaneously against the conveying direction. When the weights 4a and 5a (or 4a'' and 5a'') are in these positions, the reciprocal vibratory motion of the trough 2 is produced. When the weights 4a and 5a (or 4a'' and 5a'') face towards the sides, the force components cancel each other out, at which time no lateral movement occurs. The bars 6 provided with rubber discs 6a, 6b, 6c and 6d increase the vibratory motion of the trough. The bars 6 are preferably installed in such a way that they are oblique to the conveying direction of the material.

Figures 1 and 2 depict two ways in which the wheels 4 and 5 (or 4'' and 5'') can be caused to rotate at the same speed in opposite directions but this can be implemented by using chain, belt or cog-wheel transmission, or combinations of the same.

The vibrating conveyors described above have very few parts which wear out and require maintenance. The maintenance involves only the lubrication of the wheels and the bearings. In addition, the dynamic horizontal and vertical forces produced by the vibrating conveyor are very slight, and so the vibrating conveyor can be attached very simply to the base.

The movement of the material being conveyed on the trough 2 can be regulated in various ways, for example by varying the rotational velocity of the motor 3 and/or by varying the counterweights 4a and 5a, or 4a'' and 5a''. The vibratory motion can also be regulated by varying the size of the rubber discs 6a, 6b, 6c and 6d and the properties (hardness/softness) of the rubber. In addition, the rubber discs 6a, 6b, 6c and 6d can be compressed by means of nuts 9 at the ends of the bars 6. This is a rapid and easy procedure, and such a possibility for regulation is significant in, for example, the conveying of waste food, as summer or winter conditions affect the properties of the material being conveyed. Likewise, such a possibility of regulation is important in, for example, feed conveyors when conveying varying material and/ or varying quantities of material.

The vibrating conveyor according to the invention is not limited to the drive mechanisms desoribed above. Thus, the drive mechanism can, for example, be a 2-wheel system, in which unbalanced wheels rotating in different directions are on the same shaft. It is also possible to use encased drive mechanisms. In the embodiments depicted in the figures, the shafts of the

unbalanced wheels are substantially vertical, but it is also possible to install the shafts in such a way that they are horizontal or oblique to the trough.

The drive mechanism can be installed at any point of the trough, for example, in the middle of the trough. When very long troughs are used, several drive mechanisms can be used.

The material used for the trough can be, for example, ordinary steel plate or aluminium or, depending on the material to be conveyed, also some special material such as a material which resists heat and wear. Instead of a trough, some other system can be used, for example, a closed conveyor, whereby dust and other detrimental materials are avoided. The trough can also be fitted with a sieve zone. This is advantageous when a vibrating conveyor is used in connected with chippers, because thereby sawdust and other fine fractions can be separated and removed at a point prior to the chipper.

Vibrating conveyors according to the invention can be used for conveying round timbers, strips of wood, chips, sawdust, ores, gravel, coal, fertilizers, waste, packaged goods, etc.

## Claims

1. A vibrating conveyor comprising a frame (1), a supporting surface assembly (2) for the material to be conveyed, said assembly (2) being superposed and connected to the frame (1), and driving means including motive means (3) and two unbalanced rotating masses (4, 5, 4'', 5'') driven by said motive means at the same speed in opposite directions, said rotating masses being connected to said assembly (2) for imparting a substantially horizontal reciprocal motion thereto, characterized in that the supporting surface assembly (2) is supported on the frame (1) by means of rigid bars (6), one end of each bar (6) extending through an opening in part of said frame (1) and the other end of each bar (6) extending through an opening in part of said assembly (2), fastening means (9) for attaching the bars (6) to the frame (1) and assembly (2), and resilient means (6a, 6b, 6c, 6d) through which the bar (6) extends and on which the fastening (9) acts and which bear against both sides of the opening in the frame (1) and assembly (2) to longitudinally resiliently locate the bar (6) in position therein, and in that said motive means includes a single motor (3) driving one (4, 4'') of said two unbalanced masses, the other unbalanced mass (5, 5'') being driven from the first mass (4, 4'').

2. A vibrating conveyor according to claim 1, characterized in that each bar has a lower threaded end and an upper threaded end, on which ends nuts (9) are threaded.

3. A vibrating conveyor according to claim 1 or 2, characterized in that the resilient means comprises discs (6a, 6b, 6c, 6d) made of rubber or plastics material.

4. A vibrating conveyor according to any of the preceding claims, characterized in that the driving means is mounted on and supported by the supporting surface assembly (2).

5. A vibrating conveyor according to any of the preceding claims, characterized in that the driving means includes two unbalanced masses (4, 5, 4'', 5'') mounted on different substantially vertical shafts (4b, 5b, 4b'', 5b'').

6. A vibrating conveyor according to claim 5, characterized in that the motive means includes a crosswise belt transmission connected to and effecting rotation of the unbalanced masses (4'', 5''), the vertical shafts (4b'', 5b'') being oblique in relation to each other.

## Patentansprüche

1. Ein vibrierender Förderer, der folgendes umfasst: einen Rahmen (1), eine Stützflächenanordnung (2) für das zu befördernde Material, wobei besagte Anordnung (2) über dem Rahmen (1) angebracht und mit diesem verbunden ist, und Antriebsmittel; die Bewegungsmittel (3) und zwei rotierende, aussergleichgewichtige Massen (4, 5, 4'', 5'') enthalten, die von besagten Bewegungsmitteln mit derselben Geschwindigkeit in entgegangesetzten Richtungen angetrieben werden, wobei besagte rotierende Massen an besagter Anordnung (2) befestigt werden, um auf sie eine im wesentlichen horizontale, reziproke Bewegung zu übertragen, dadurch gekennzeichnet, dass die Stützflächenanordnung (2) von einem Rahmen (1) mittels starrer Stangen (6) getragen wird, wobei ein Ende jeder Stange (6) sich durch eine Oeffnung in einem Teil des besagten Rahmen (1) erstreckt, und das andere Ende jeder Stange (6) sich durch eine Oeffnung in einem Teil der besagten Anordnung (2) erstreckt, Feststellmittel (9) zum Befestigen der Stangen (6) an den Rahmen (1) und an der Anordnung (2), und elastische Mittel (6a, 6b, 6c, 6d), durch welche sich die Stange (6) erstreckt und auf welchen das Feststellen (9) wirkt und die auf beiden Seiten der Oeffnung im Rahmen (1) und in der Anordnung (2) lagern, um die Stange (6) in Längsrichtung und elastisch in einer Stellung darin zu halten, und dass besagte Bewegungsmittel einen einzigen Motor (3) enthalten, der eine (4, 4'') der besagten, beiden, aussergleichgewichtigen Massen antreibt, wobei die andere aussergleichgewichtige Masse (5, 5'') von der ersten Masse (4, 4'') angetrieben wird.

2. Vibrierender Förderer nach Anspruch 1, dadurch gekennzeichnet, dass jede Stange ein niedrigeres Ende mit Gewinde und ein höheres Ende mit Gewinde aufweist, wobei an jedem Ende Muttern (9) aufgeschraubt sind.

3. Vibrierender Förderer nach Anspruch 1 oder 2, dadurch gekennzeichnet, dass die elastischen Mittel Scheiben (6a, 6b, 6c, 6d) umfassen, die aus Gummi oder einem Kunststoffmaterial hergestellt sind.

4. Vibrierender Förderer nach einem der vorangehenden Ansprüche, dadurch gekennzeichnet, dass die Antriebsmittel auf der Stützflächenanordnung (2) befestigt sind und auf ihr getragen werden.

5. Vibrierender Förderer nach einem der vorangehenden Ansprüche, dadurch gekennzeichnet, dass die Antriebsmittel zwei aussergleichgewichtige Massen (4, 5, 4'', 5'') enthalten, die auf zwei verschiedenen, im wesentlichen vertikalen Wellen (4b, 5b, 4b'', 5b'') befestigt sind.

6. Vibrierender Förderer nach Anspruch 5, dadurch gekennzeichnet, dass die Bewegungsmittel eine quergerichtete Riementransmission enthalten, die mit den aussergleichgewichtigen Massen (4'', 5'') verbunden ist und ihre Drehung verursachen, wobei die vertikalen Wellen (4b'', 5b'') in einem Schrägwinkel zu ihnen stehen.

## Revendications

1. Transporteur vibrant comprenant un bâti (1), un ensemble de surface de support (2) pour la matière à transporter, cet ensemble (2) étant superposé au bâti (1) et relié à celui-ci, et un dispositif d'entraînement comprenant un dispositif moteur (3) et deux masses tournantes à balourd (4, 5, 4', 5') entraînées par le dispositif moteur à la même vitesse dans des sens opposés, les masses tournantes étant reliées à l'ensemble (2) pour y communiquer un mouvement alternatif en substance horizontal, caractérisé en ce que l'ensemble de surface de support (2) est monté sur le bâti (1) au moyen de barres rigides (6), une extrémité de chaque barre (6) traversant une ouverture prévue dans une partie du bâti (1) et l'autre extrémité de chaque barre (6) traversant une ouverture prévue dans une partie de l'ensemble (2), des moyens de fixation (9) pour attacher les barres (6) au bâti (1) et à l'ensemble (2) et des moyens élastiques (6a, 6b, 6c, 6d) que la barre (6) traverse et sur lesquels la fixation (9) agit et qui portent contre les deux côtés de l'ouverture dans le bâti (1) et l'ensemble (2) pour y maintenir élastiquement la barre (6) en place dans le sens longitudinal, et en ce que le dispositif moteur comprend un moteur unique (3) entraînant l'une des deux masses à balourd (4, 4''), l'autre masse à balourd (5, 5'') étant entraînée par la première masse (4, 4'').

2. Transporteur vibrant suivant la revendication 1, caractérisé en ce que chaque barre comporte une extrémité inférieure filetée et une extrémité supérieure filetée, sur lesquelles sont vissés des écrous (9).

3. Transporteur vibrant suivant la revendication 1 ou 2, caractérisé en ce que les moyens élastiques comprennent des disques (6a, 6b, 6c, 6d) en caoutchouc ou en matière plastique.

4. Transporteur vibrant suivant l'une quelconque des revendications précédentes, caractérisé en ce que le dispositif d'entraînement est monté sur l'ensemble de surface de support (2) et est supporté par celui-ci.

5. Transporteur vibrant suivant l'une quelconque des revendications précédentes, caractérisé en ce que le dispositif d'entraînement comprend deux masses à balourd (4, 5, 4'', 5'') montées sur différents arbres en substance verticaux (4b, 5b, 4b'', 5b'').

6. Transporteur vibrant suivant la revendication 5, caractérisé en ce que le dispositif moteur comprend une transmission à courroie en croix reliée aux masses à balourd (4'', 5'') et les faisant tourner, les arbres verticaux (4b'', 5b'') étant obliques l'u par rapport à l'autre.

*Fig. 1*

*Fig. 2a*

*Fig. 2b*